# EUROPEAN PATENT APPLICATION

(11) **EP 0 870 539 A2**
(43) Date of publication of application: **14.10.1998**
(21) Application number: 98106447.0
(22) Date of filing: 08.04.1998
(51) Int. Cl.: B01J 8/24, B01J 8/00

(54) **Gas-phase polymerization apparatus**

(30) Priority: 10.04.1997 JP 92162/97
(71) Applicant: MITSUI CHEMICALS, INC., Tokyo (JP)
(72) Inventor: Yamamoto, Ryoichi, Ishihara-shi, Chiba-ken (JP); Ohtani, Satoru, Ishihara-shi, Chiba-ken (JP); Arase, Tomohiro, Ishihara-shi, Chiba-ken (JP); Kikuchi, Yoshiaki, Ishihara-shi, Chiba-ken (JP); Matsuda, Shotaro, Ishihara-shi, Chiba-ken (JP)
(74) Representative: Füchsle, Klaus, Dipl.-Ing.

(57) **Abstract**

In order to discharge the gas, which enters together with powder polymer through a polymer discharge pipe (12) from a gas-phase polymerization vessel (3) into a sedimentation tank (13), from the sedimentation tank (13), the sedimentation tank (13) is connected by a gas discharge pipe (15b) to the portion of the lower pressure than the pressure in the sedimentation tank (13) of a gas-phase circulation system (9) for circulating the gas between the outside and inside of the gas-phase polymerization vessel, so that the mass of powder is not formed in the gas discharge pipe connecting the gas-phase polymerization vessel (3) and the sedimentation tank (13).

## Description

### BACKGROUND OF INVENTION

### 1. Field of the Invention

The present invention relates to a gas-phase polymerization apparatus, and more specifically to a gas-phase polymerization apparatus in which a monomer and/or comonomer in a gas-phase as a starting material of polymer is reacted in the presence of solid polymerization catalyst and other gas-phase necessary for the polymerization to yield a polymer in the form of powder (hereinafter referred as "powder polymer").

### 2. Description of the Related Art

There is known as a most common gas-phase polymerization apparatus a fluid bed type gas-phase polymerization apparatus in which the gas-phase polymerization vessel has a gas-distributing plate.

In the gas-phase polymerization apparatus of the above-described fluid bed type, a monomer or a gas containing monomer is introduced into the lower part of gas-phase polymerization vessel through a gas introduction conduit by means of compressor or blower (so far as not to be given especially, "gas" means generally a monomer or a gas containing monomer).

The gas introduced into the gas-phase polymerization vessel is then distributed homogeneously in the gas-phase polymerization vessel by a gas-distributing plate disposed in the lower part of the gas-phase polymerization vessel and has a number of perforations. The homogeneously distributed gas goes up in the gas-phase polymerization vessel. Thus, the polymerization takes place while powders such as powder polymer, which has already been a polymer through the ascending gas stream, are being fluidized.

The fluidized particles then may form a constant fluidizing layer and the thickness of the layer may be controlled, for example, by the fluidizaion of gas. In the fluidizing layer, the monomer is contacting with the catalyst particles (solid polymerization catalyst) to be polymerized.

A gas discharge pipe is connected to the gas-phase polymerization vessel at the upper part of the vessel, the gas being exhausted from the part.

The gas introduction pipe and gas discharge pipe may form a gas-phase circulation system (for example, a circular conduit) for circulating the gas to the vessel.

The gas-phase circulation system is provided with a gas circulator such as a blower and the like. The gas circulator is a device for flowing a gas through the gas-phase circulation system to the gas-phase polymerization vessel. The gas circulator is also a device for feeding the gas that is in an unreacted condition in the gas-phase polymerization vessel and drawn out therefrom, and a gas that is newly fed, if necessary, to the vessel.

The gas that is fed into the gas-phase polymerization vessel by a gas circulator, may be polymerized as mentioned above to yield a powder polymer. The gas that does not take part in the polymerization in the gas-phase polymerization vessel, is exhausted through the gas discharge pipe from the gas-phase polymerization vessel and then fed again through the gas introduction pipe to the gas-phase polymerization vessel to be subjected to the polymerization with repeating the production of powder polymer.

Incidentally, a monomer and comonomer as the starting material of polymer as well as a solid polymerization catalyst etc. are naturally supplied to the gas-phase circulation system, thereby the amount of these components consumed in the polymerization may be compensated. The gas containing a monomer and/or comonomer as well as the circulation gas, which are supplied to the gas-phase circulation system, may be those being capable of forming a fluidizing layer and may contain partially a liquid phase. In particular, when the heat of reaction in the gas-phase polymerization vessel is high, a readily volatile and a coagulative medium such as propane, butane or the like may be contained though such medium is inert to the polymerization.

Further, a sedimentation equipment connected to the polymer discharge pipe is provided to the gas-phase polymerization vessel. Such a equipment is called as tank, dram and the like, however, it will be referred to generally as "sedimentation tank" hereinafter.

The sedimentation tank means a place for transporting, from the gas-phase polymerization vessel, the powder polymer that has already been formed by the polymerization in the gas-phase polymerization vessel. The polymer discharge pipe is used for transporting the powder polymer from the gas-phase polymerization vessel to the sedimentation tank. The transportation is accompanied with a gas, which has been not used for the polymerization and may contain the unreacted monomer, the polymerization catalyst and the like. Therefore, other than the powder polymer, a gas containing the unreacted monomer, the polymerization catalyst, etc. may enter into the sedimentation tank. These gases are collected in the upper part of the sedimentation tank and drawn out from the sedimentation tank through a gas discharge pipe equipped to the upper part of the sedimentation tank. The discharged gas is then returned through the gas discharge pipe to the gas-phase polymerization vessel to be reused for the polymerization. The gas discharge pipe is connected to the upper space of the vessel.

The gas to be returned from the sedimentation tank through the gas discharge pipe to the gas-phase polymerization vessel, is accompanied with a small amount of powder polymer.

The small amount of powder polymer is occasionally adhered to the end of the gas discharge pipe facing to the inside of the vessel. Then, since the powder polymer grows there to form a large mass, there is a worriment that the end opening of the gas discharge pipe would be blocked. When the mass would be fallen off from the end opening of the gas discharge pipe, the fallen mass of powder polymer will subside in the gas-phase polymerization vessel to block soon the fine holes of the gas-distributing plate. As a result, there is a worriment that blocking of the gas-distributing plate would be occurred.

Thus, when the gas discharge pipe and the gas-distributing plate are blocked with the mass of powder polymer, they should be cleaned. However, it is troublesome to clean them and the operation of apparatus must be stopped during the cleaning, resulting in reducing the productivity.

### SUMMARY OF THE INVENTION

The present invention has been made to solve the above-mentioned conventional problems, and therefore an object of the present invention is to provide a gas-phase polymerization apparatus in which forming of the mass of powder polymer in the gas discharge pipe can be prevented.

The present inventors have found that the growth of powder polymer at the end of the gas discharge pipe facing to the inside of the gas-phase polymerization vessel is caused from (1) the low gas flow rate in the upper space in the vessel being connected to the gas discharge pipe and (2) the presence of the site in the gas-phase circulation system where the gas flow rate is higher than that in the upper space of the gas-phase polymerization vessel.

As a result of intensive study in view of these facts, the present inventors have invented a gas-phase polymerization apparatus in which the growth of powder polymer in the gas discharge pipe may be prevented very easily.

Namely, the gas-phase polymerization apparatus according to the present invention is comprised of: a gas-phase polymerization vessel in which the polymerization is carried out in the gas-phase in the presence of solid polymerization catalyst to form a powder polymer; a gas-phase circulation system in which the unreacted monomer being not subjected to the polymerization in the gas-phase polymerization vessel and other gas-phases are discharged from the gas-phase polymerization vessel and fed again to the gas-phase polymerization vessel for the circulation thereof; a polymer discharge pipe for discharging the powder polymer formed by the polymerization in the gas-phase polymerization vessel therefrom; a sedimentation equipment for sedimentating the powder polymer that is discharged from the polymer discharge pipe being connected to the polymer discharge pipe; and a gas discharge pipe that may connect the sedimentation equipment to the lower pressure portion in the gas-phase circulation system than the pressure in the sedimentation equipment, for drawing out at least a part of the gas-phase that may enter into the sedimentation equipment through the polymer discharge pipe together with the polymer powder from the sedimentation equipment.

The circulation system according to the present invention is comprised of: a gas exhaust port of the gas-phase polymerization vessel; a refrigeration equipment; a blower or compressor; a gas introduction port of the gas-phase polymerization vessel; and pipings directly or indirectly connecting them. An equipment other than those as mentioned above, for example, a drain pot or the like may be provided between the gas exhaust port and the gas introduction port. The arrangement and the number of the devices may be selected arbitrarily, if necessary.

The gas-phase polymerization vessel of the present invention with a constitution described above intends to discharge the gas-phase, which may enter together with the powder polymer through the polymer discharge pipe from the vessel into the sedimentation tank, from said sedimentation tank.

In order to carry out that matter, the sedimentation tank is connected through a gas discharge pipe to the lower pressure portion of the gas-phase circulation system than the pressure in the sedimentation tank.

As a result of that, the gas-phase in the sedimentation tank may be introduced through the gas discharge pipe into the gas-phase circulation system.

Although the gas discharge pipe may be connected anywhere in the gas-phase circulation system, preferably it is connected to the site having, for example, a linear velocity of equal to or more than 5 m/sec of the circulation gas in terms of the cross-section of the pipe, and more preferably equal to or more than 10 m/sec. The upper limit of the linear velocity of circulation gas is not critical but preferably, from the view point of preventing the increase of pressure loss and the vibration of piping, it is in general equal to or less than 100 m/sec, more preferably equal to or less than 50 m/sec.

Furthermore, it is preferable that both a refrigeration equipment to remove the heat of reaction in the polymerization and a gas-phase circulation equipment to circulate the gas-phase in the gas-phase circulation system are provided in the system, in which the refrigeration equipment is disposed at the gas exhaust side of the vessel and that the gas discharge pipe is connected to the site between the refrigeration and the gas-phase circulation equipment in the circulation system. More specifically, when the gas exhaust port of the gas-phase polymerization vessel, a heat remover, a blower or compressor and a gas introduction pipe of the gas-phase polymerization vessel are arranged in this series in the gas-phase circulation system, it is preferred to connect the gas discharge pipe of the sedimentation tank to the place which is between the heat remover and the blower or compressor.

When a pressure difference between the circulation system and the sedimentation tank is preset so that the powder polymer may be blown off by the gas flow in the gas discharge pipe, the gas flow rate in the gas discharge pipe is higher than the case in which the gas discharge pipe is connected in a common manner to the upper space of the gas-phase polymerization vessel. Accordingly, the mass of polymer is not formed in the gas discharge pipe, so that it becomes unnecessary to clean the gas discharge pipe and the gas-distributing plate, which must be cleaned conventionally. Therefore, it is not necessary to stop the operation of the gas-phase polymerization vessel, resulting in no reduction of the productivity.

### BRIEF DESCRIPTION OF THE DRAWINGS

The object and features of the present invention will become more apparent from the consideration of the following detailed description taken in conjunction with the accompanying drawings in which:
Fig. 1 is a schematic view of the gas-phase polymerization apparatus according to the present invention; and
Fig. 2 is a view showing a modified example of the gas-phase polymerization apparatus according to the present invention.

### DETAILED DESCRIPTION OF THE PREFERRED EMBODIMENTS

The gas-phase polymerization apparatus according to the present invention will be described in detail based on the embodiments with reference to the drawings.

A gas-phase polymerization apparatus 1 has a gas-phase polymerization vessel 3 having a gas-distributing plate 2 in the inside.

The gas-phase polymerization vessel 3 is a vessel in which a monomer in the gas-phase as a starting material of polymer is polymerized in the presence of solid polymerization catalyst, if necessary, with a comonomer to form a powder polymer.

The gas-phase polymerization vessel 3 has a gas introduction pipe 5 in the lower portion thereof and a gas discharge pipe 7 in the upper portion thereof, and are connected to each other. The gas introduction pipe 5 and the gas discharge pipe 7 are included in the gas-phase circulation system, through which unreacted monomer having been not subjected to the polymerization in the gas-phase polymerization vessel 3 is recirculated to the gas-phase polymerization vessel 3.

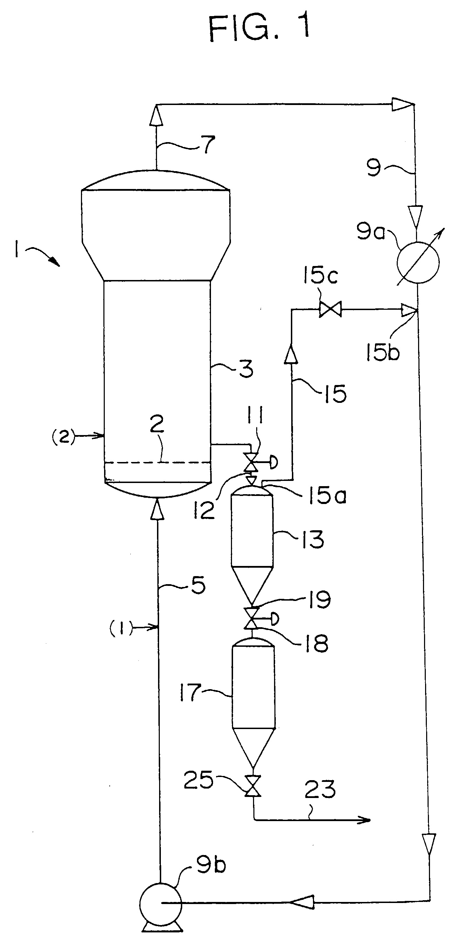

A fluid bed is formed in the gas-phase polymerization vessel 3 by a gas containing the unreacted monomer and a monomer being fed newly to the gas-phase polymerization apparatus 1. It should be noted that the monomer and other gases necessary for the polymerization may be fed at a suitable portion in the gas-phase circulation system 9 (for example, as shown by numeral (1) in Fig. 1).

The gas-phase circulation system 9 includes, other than the gas introduction pipe 5 and the gas discharge pipe 7, a heat remover 9a as a cooling equipment and a gas blower (or compressor) 9b as a gas-phase circulation equipment, which are arranged between the gas introduction pipe 5 and the gas discharge pipe 7.

The heat of reaction generated by the polymerization is released outside the apparatus by the heat remove 9a. The gas is circulated repeatedly in the gas-phase circulation system 9 by means of a circulating gas blower 9b. The direction of gas circulation is shown by white arrows.

The solid polymerization catalyst is fed, for example, at the portion as shown by the numeral (1) in Fig. 1 and a comonomer being fed, if necessary, for example, at the portion shown by numeral (1) or (2) in Fig. 1.

A sedimentation tank 13 as a sedimentating equipment is connected to the lower portion of the gas-phase polymerization vessel 3 through a polymer discharge pipe 12 having a ball valve 11.

The polymer discharge pipe 12 may discharge the powder polymer formed by the polymerization in the gas-phase polymerization vessel 3 to the outside of the gas-phase polymerization vessel 3.

The sedimentation tank 13 precipitates therein the powder polymer discharged from the polymer discharge pipe 12 and, when the ball valve 11 is opened, the powder polymer and the gas which are from the gas-phase polymerization vessel 3 through the polymer discharge pipe 12 enter into the sedimentation tank 13. The entrainment of the gas to the next step as it is causes often the loss of monomer, etc. and a complicated recirculation. Therefore, one end 15a of the gas discharge pipe 15 is equipped to the upper portion of the sedimentation tank 13 to exhaust the gases from the tank 13. Also, another end 15b of the discharge pipe 15 is connected to a lower pressure portion of the gas-phase circulation system 9 than the pressure in the sedimentation tank 13. In this embodiment, a portion along the direction of gas circulation and between the heat remover 9a and the circulation gas blower 9b in the route of gas-phase circulation system 9 is the portion of the lower pressure than the pressure in the sedimentation tank 13. More specifically, the other end 15b of the gas discharge pipe 15 is connected to the portion directly just after the heat remover 9a in the circulation system 9. Incidentally, a vent valve 15c is provided in the middle of gas discharge pipe 15. The vent valve 15c is a valve for controlling the volume of gas flowing in the gas discharge pipe 15 and in general opened.

A transportation tank 17 is connected to the lower end of the sedimentation tank 13 through a connecting pipe 19 having a ball valve 18. The transportation tank 17 is the final tank for transporting the powder polymer accumulated in the sedimentation tank 13 to the other treatment equipment (not shown). The shape of transportation tank 17 may be the same as or different from the sedimentation tank 13.

The ball valve 18 may introduce the powder polymer in the sedimentation tank 13 to the transportation tank 17 and the lower portion of the transportation tank 17 is connected to a transporting pipe 23 through a discharge valve 25, which is always opened.

Next, the description is made of the process for discharging the powder polymer and gas from the gas-phase polymerization vessel 3.
1) The ball valve 11 is opened to send a powder polymer accompanying with a gas from the gas-phase polymerization vessel 3 through the polymer discharge pipe 12 to the sedimentation tank 13. At this time, the vent valve 15c is opened and the ball valve 18 is closed.
   Since the vent valve 15c is opened and the ball valve 18 is closed, when the powder polymer accompanying with a gas is sent to the sedimentation tank 13 in such a manner described above, a given amount of powder polymer is accumulated in the sedimentation tank 13. At the same time, the gas sent to the sedimentation tank 13 is introduced through the gas discharge pipe 15 to the gas-phase circulation system 9.
2) When a given amount of powder polymer is accumulated in the sedimentation tank 13, the ball valve 11 is closed to stop the outflow of powder polymer from the gas-phase polymerization vessel 3.
3) When the ball valve 18 is then opened, the powder polymer flows from the lower end of the sedimentation tank 13 through the connecting pipe 19 into the transportation tank 17. The vent valve 15c is opened generally and the powder polymer may flow smoothly. Further, as the powder polymer flowing into the transportation tank 17 may be accompanied with a small amount of gas, it would be possible to discharge the gas being accumulated in the upper space of the transportation tank 17.
4) After finishing the flowing of the powder polymer to the transportaion tank 17, the ball valve 18 is closed. The discharge valve 25 is opened always as described above, so that the powder polymer in the transportation tank 17 may be transported always through the transporting pipe 23 to the other treatment equipments mentioned above. The open-and-close control of the ball valves 11 and 18 may be carried out appropriately so as not to stop the feed of powder polymer to the other treatment equipment due to the disappearance of the powder polymer in the transportation tank 17.

In such a gas-phase polymerization apparatus 1, the gas entering and accompanying with the powder polymer from the gas-phase polymerization vessel 3 through the polymer discharge pipe 12 into the sedimentation tank 13 is introduced through the gas discharge pipe 15 into the portion between the heat remover 9a and the circulation gas blower 9b in the gas-phase circulation system 9.

When a pressure difference between the circulation system 9 and the sedimentation tank 13 is preset so that the powder polymer may be blown off by the gas flow in the gas-phase circulation system 9, the gas flow rate in the gas discharge pipe 15 is higher than the case in which the gas discharge pipe 15 is connected in a common manner to the upper space of the gas-phase polymerization vessel 3. Accordingly, the mass of powder polymer is not formed in the gas discharge pipe 15.

As a result, the gas discharge pipe 15 and the gas-distributing plate 2 may be not blocked with the mass of powder polymer, so that it becomes unnecessary to clean the gas discharge pipe and the gas-distributing plate, which must be cleaned conventionally. Therefore, it is not necessary to stop the operation of the gas-phase polymerization apparatus 1 resulting in no reduction of the productivity.

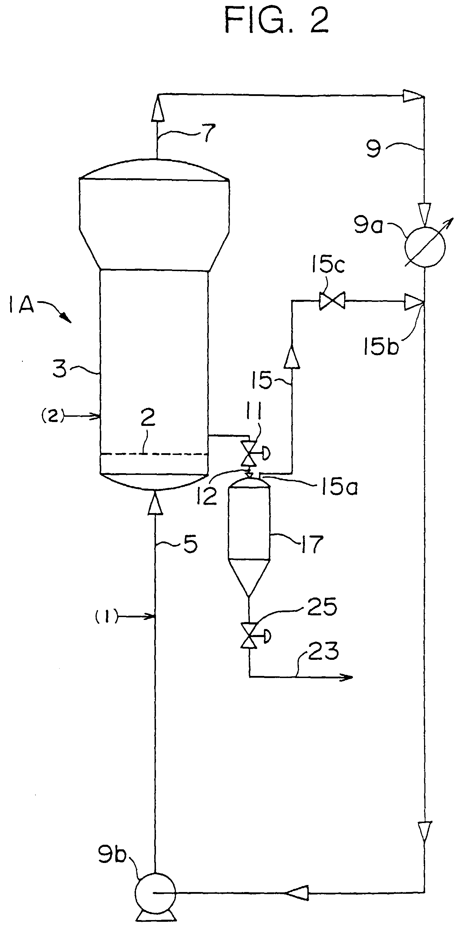

On the other hand, the gas-phase polymerization apparatus 1A, as shown in Fig. 2, which is a modification example of the gas-phase polymerization apparatus 1, is different from the apparatus 1 in that the apparatus 1A has no sedimentation tank 13 as well as no connecting pipe 19 having the ball valve 18 and accompanying with the tank 13; and that the members down the transportation tank 17 are connected directly to the polymer discharge pipe 12 having the ball valve 11.

However, the gas-phase polymerization apparatus 1A has no sedimentation tank 13 and no connecting pipe 19, so that the powder polymer is discharged always continuously from the gas-phase polymerization vessel 3 to the transportation tank 17 and transported continuously to the other treatment equipment as mentioned above through the conveying pipe 23 having the discharge valve 25 being opened all the time.

In the gas-phase polymerization apparatus 1A, the transportation tank 17 is connected to the portion of lower pressure than the pressure in the transportation tank 17 of the gas-phase circulation system 9 through the route of polymerization vessel 3 - polymer discharge pipe 12 - transporation tank 17 - gas discharge pipe 15. Insert pipes are disposed in the tank 17 to form the powder surface. Otherwise, the level of the powder surface is determined by a radiation liquid surface meter etc. and its level is adjusted by the ball valve 11. At this time, the gas separated in the transportation tank 17 may be discharged therefrom and introduced into the circulation system 9. As a result, the gas discharge pipe 15 and the gas-distributing plate 2 may be not blocked, so that it may be not required to clean the pipe and the plate as in the gas-phase polymerization apparatus 1.

Incidentally, the same parts in the varied apparatus 1A as in the apparatus 1 are provided with same symbols to abbreviate the explanation.

## Claims

1. A gas-phase polymerization apparatus, comprising:
a gas-phase polymerization vessel in which a polymer in the form of powder is produced by the polymerization in the gas-phase in the presence of solid polymerization catalyst;
a gas-phase circulation system in which the unreacted monomer being not subjected to the polymerization in the vessel and the other gas are discharged from said vessel and fed again to said vessel to circulate them;
a polymer discharge pipe for discharging said powder polymer formed by the polymerization in said gas-phase polymerization vessel from said gas-phase polymerization vessel;
a sedimentation equipment being connected to the polymer discharge pipe and sedimentating said powder polymer discharged from said polymer discharge pipe; and
a gas discharge pipe, through which said sedimentation equipment is connected to the portion of lower pressure than the pressure in said sedimentation equipment of said gas-phase circulating system in order that at least a part of gas, which may enter together with said powder polymer through said polymer discharge pipe into said sedimentation equipment, may be discharged from said sedimentation equipment.

2. A gas-phase polymerization apparatus as claimed in claim 1, wherein said gas discharge pipe is connected to the portion having a circulation gas linear velocity of equal to or more than 5 m/sec in said gas-phase circulation system.

3. A gas-phase polymerization apparatus as claimed in claim 1, wherein said gas-phase circulation system comprises a cooling equipment for removing the heat of reaction in the polymerization and a gas-phase circulation equipment for circulating the gas in said gas-phase circulation system, and said gas discharge pipe is connected to the portion between said cooling equipment and said gas-phase circulation equipment under the condition in which said cooling equipment is disposed at the gas exhaust side of said gas-phase polymerization vessel.
